# EUROPEAN PATENT APPLICATION

(11) **EP 4 332 714 A1**
(43) Date of publication of application: **06.03.2024**
(21) Application number: 22794394.1
(22) Date of filing: 17.03.2022
(51) Int. Cl.: G05D 1/02

(54) **ROBOT NAVIGATION METHOD, CHIP AND ROBOT**

(30) Priority: 26.04.2021 CN 202110451456
(71) Applicant: Amicro Semiconductor Co., Ltd., Hengqin New District, Zhuhai City Guangdong 519000 (CN)
(72) Inventor: SUN, Yongqiang, Zhuhai, Guangdong 519000 (CN)
(74) Representative: Berggren Oy
(86) International application number: PCT/CN2022/081522
(87) International publication number: WO 2022/227917

(57) **Abstract**

Disclosed in the embodiments of the present disclosure are a navigation method of a robot, a chip and a robot. In the navigation method, when the position of the robot is not communicated with a preset known grid area constructed before relocalization , and grids allowing the robot to pass are marked within a detectable distance of a sensor of the robot, so as to plan a navigation path for enabling the robot to actually walk into the preset known grid area, so that a navigation path for guiding the robot to return to the working position before relocalization can be planned by using a path search algorithm in a map area where the robot is allowed to pass.

## Description

### Cross-Reference to Related Application

This disclosure claims priority to Chinese Application No.202110451456.X filed on Apr.26,2021 and International Application No.PCT/CN2022/081522 filed on Mar.17,2022 and published in Chinese as International Publication No. WO 2022/227917A1 on Nov. 3,2022, the entire contents of which are hereby incorporated by reference.

### Technical Field

The disclosure relates to the technical field of robotic map navigation, and in particular to a navigation method of a robot, chip and robot.

### Background

With the development of technology and the improvement of living standards, more and more jobs can be replaced by robots. In some cases, robots need to locate themselves quickly and accurately even after being moved and restarted. For example, in the process of normal cleaning of a cleaning robot, the user will often deliberately move the cleaning robot from one position to another for various reasons. When the cleaning robot encounters this situation, the robot starts to relocalization. After the robot is resuccessfully positioned, the robot will navigate back to the position before moved.

Existing technology, In order to restart the robot in a new position or to locate itself on startup, the technology used is called SLAM (simultaneous localization and mapping, synchronous positioning and mapping) technology, realize the mobile device position in the unknown environment. During the movement of the robot, it positions itself according to the position estimation and the map. Therefore, after relocalization, the position relationship between the robot and the cleaned area is divided into two kinds: inside the map and outside the map. The robot can start normal navigation in the map (in the cleaned area), but outside the map (uncleaned area), the robot is in the uncleaned area. Due to the unknown area separation between inside the map (in the swept area) and outside the map (in the uncleaned area),a mature path planning algorithms such as incremental heuristic search algorithm and shortest path algorithm often guide the robot to fail to search out the feasible path where the robot is allowed to pass, eventually leading to navigation failure.

### Summary

The disclosure discloses a navigation method of a robot, chip and robot. A specific technical solution includes as follows.

A navigation method of a robot, the navigation method includes: step A1, after a robot is triggered to relocate, whether a current position of the robot is connected to a preset known grid area is judged by a first area judgment method, if so, step A2 is performed, otherwise step A3 is performed; step A2, a path search algorithm is used to obtain a latest planning path, and then the robot is controlled to move back to a relocalization target position along the latest planning path ;step A3, all the unknown grids within a detectable distance of a sensor of the robot are marked as pre-configured passable grids so that a path search algorithm is directly called to plan the path, and then the path search algorithm is used to obtain a latest planning path, and then the robot is controlled to move along the latest planning path until the current position of the robot is determined connected to the preset known grid area by a second area judgment method, and then each of the pre-configured passable grids is marked as an unknown grid, and then step A2 is performed; the relocalization target position is a working position recorded within the preset known grid area before the robot is triggered to relocate; the current position of the robot is determined after the robot is triggered to relocate.

Compared with the prior art, when the position of the robot is disconnected from the preset known grid area constructed before relocalization, marking the grid allowing the passage of the robot within the detectable distance of the sensor of the robot in order to plan the navigation path for the robot to actually walk into the preset known grid area, thus, the robot uses the path search algorithm to plan the navigation path in the allowable map area, so as to back to the relocalization target position.

Further, at step A3, the second area judgment method includes: step A31, the current position of the robot is updated as a currently searched position of the robot, wherein, the current position of the robot includes the position where the robot is triggered to relocate; step A32, with the currently searched position of the robot as a starting point, along a current movement direction of the robot, whether the neighborhood grid of the currently searched position of the robot is a known grid is judged, if so, the line segment length between the neighborhood grid of the currently searched position of the robot and the current position of the robot is obtained, and then step A33 is performed, otherwise searching for new neighborhood grids is stopped and the robot is controlled to continue to move along the latest planning path; step A33, whether the line segment length between a neighborhood grid of the currently searched position of the robot and the current position of the robot is greater than a preset passable distance is judged, if so, it is determined that the current position of the robot is connected to the preset known grid area, otherwise a neighborhood grid of the currently searched position of the robot is updated as the currently searched position of the robot; and then step A32 is performed; the preset passable distance is greater than a diameter of a body of the robot, and the preset passable distance is less than or equal to twice the diameter of a body of the robot. This technical solution is suitable for directional search of connected areas after the robot is in a navigation movement state, to avoid the influence of the known grid constructed during the robot navigation on the judgment area connectivity and reduce miscalculation.

Further, after the robot is triggered to relocate, the current position of the robot is marked as a known grid in the real-time constructed map, and the current position of the robot is a new relative to the relocalization target position. Thus, the connectivity between the known grid and the current position of the robot is used to search out the known grid area that allows the robot to reach in the local area.

Further, the pre-configured passable grid is allowed to be connected to a path planned by the path search algorithm, to connect a local map constructed by the robot at its current position with the preset known grid area; wherein the path planned by the path search algorithm supports the bypass of the detected grids marking the obstacle information.

Further, after the robot is triggered to relocate, the robot constructs a local map at its current position, this local map is specific to: with the current position of the robot as the center of the circle, grids in the area of the radius with a preset detection length are marked as known grids; the preset detection length is less than or equal to a diameter of a body of the robot; the known grids include grid without obstacle information and grid marking the obstacle information. This technical solution controls the robot to establish a real-time effective mapping area with a radius smaller than or equal to the diameter of the body of the robot with its body center as the center of the circle, a minimum effective detection area is formed near the robot's body and is used for known grids that support robot traffic.

Further, the path search algorithm is incremental heuristic search algorithm. Compared with the A* search path, the extended search is continued toward the relocation target position, but the search direction is not fixed, the calculation amount is reduced, and the search is more effective in navigation scenarios where the aforementioned technical solution is applicable.

Further, at step A1, the first area judgment method includes: step 1, a connected domain is searched for by searching the closest known grid within a neighborhood, until it is determined that a latest searched known grid meets a first area passage condition, the current position of the robot is connected to the preset known grid area, wherein a local map constructed by the robot at its current position does not overlap with the preset known grid area; step 2,after a search of all known grids within the longest distance passable is completed by the connected domain search described in the step 1,if it is determined that a latest searched known grid does not meet the first area passage condition, and then step 3 is performed; step 3, a connected domain is searched for by searching the closest grid within a neighborhood, until it is determined that a latest searched known grid meets a second area passage condition, the current position of the robot is not connected with the preset known grid area; step 4, after a search of all the grids within the longest distance searchable is completed by the connected domain search described in the step 3 , if it is determined that a latest searched known grid does not meet the second area passage condition, it is determined that the current position of the robot is connected to the preset known grid area, wherein the preset known grid area is a map area constructed and stored in the same motion area before the first area judgment method is performed.

Compared to the prior art, this technical solution control the robot to search the known grid of the neighborhood from the perspective of reachability of the robot, by means of searching a connected domain, connectivity from the near to the distant within the known grid area, then connectivity from the near to the distant in all types of grid areas is identified, including the local map constructed at the current position of the robot is adjacent to the known map area, the local map constructed at the current position of the robot overlaps with the known map area, the local map constructed at the current position of the robot is not connected with the known map area, whether the current position of the robot is connected to the known map area at the corresponding distance is in as to comprehensively judged then whether the current position of the robot is in the known map area is judged.

Further, meeting the first area passage condition means: the search radius of the robot is greater than a diameter of a body of the robot, or the search radius of the robot is greater than the diameter of the body of the robot, so that the current position of the robot is consistent with the latest search in step 1 only when the length of the line segments between the known grids is greater than the diameter of the body of the robot or the diameter of the body of the robot, the first area passage condition is met, indicating that the robot's detectable distance range or reachable distance range has exceeded the diameter of the body of the robot or the diameter of the body of the robot. The map area built by the robot itself is connected to the external pre-built preset known grid area.

Further, at step 1, the method of searching for a connected domain by searching the closest known grid within a neighborhood includes: step 11, a grid closest to the currently searched position of the robot is screened out of a pre-created first storage space, and then this screened grid is identified as the latest searched known grid determined in the step 1 or step 2, and then step 12 is performed; wherein the pre-created first storage space stores a known neighborhood grid of the currently searched position of the robot, and the known neighborhood grid of the currently searched position of the robot is a known grid in the neighborhood grid of the currently searched position of the robot; step 12, the grid information of the currently searched position of the robot is stored into a pre-created second storage space to store as a searched target grid; and in the neighborhood of the grid screened in the step 11, the grid information of the known grid is stored into the pre-created first storage space to store the target grid to be searched; the search radius of the robot is updated as the line segment length between the current position of the robot and the latest screened grid determined in the step 11; the neighborhood grid of the currently searched position of the robot includes 8 adjacent grids on the grid map constructed by the robot, these 8 adjacent grids are centered on the currently searched position of the robot; the known grids in these 8 grids are the known neighborhood grids; wherein the grid screened by step 11 does not belong to the repeatedly screened grid. By performing this technical solution to find the known grid in eight neighborhoods centered on the current search location of the robot, finding the known grid with the shortest path feature as the target grid to be searched and expanding the passable distance information of the robot, while preserving the searched known grid to distinguish the searched areas and unsearched areas of the robot, so that realizing a rapid local area search for connected domains formed by known grids connectivity, then speeding up judging whether the current position of the robot to reach the preset known grid area.

Further, before the step 11 is performed, includes: after the pre-created first storage space for storage is created, the grid information of the current position of the robot is stored into the pre-created first storage space, and the current position of the robot is configured as the currently searched position of the robot; then a grid closest to the currently searched position of the robot is screened from the pre-created first storage space, so that the current position of the robot is screened out of the pre-created first storage space and being the closest to the currently searched position of the robot; the grid information of the current position of the robot is stored into the pre-created second storage space, and the grid information of the known grid in the neighborhood grid of the current position of the robot is stored into the pre-created first storage space; the pre-created first storage space is a memory space that supports caching grid information in first-in, first-out order. This technical solution prefers the current position of the robot as the search starting point of the connected domain, and of course it is also the last grid information to come out, which improves the effectiveness and order of searching the adjacent connected domain.

Further, the step 1 includes: the step 11 and the step 12 are repeatedly performed, until the line segment length between the current position of the robot and a latest searched known grid determined in the step 11 is greater than the body diameter of the robot; wherein, before the step 11 is performed repeatedly, a grid screened in the last step 11 is updated as the currently searched position of the robot; wherein, when the grid information of the grid screened in the step 11 is detected as not being stored in the pre-created second storage space, the grid involved in the detection is a grid that is not being repeatedly searched; when the grid information of the grid screened in the step 11 is detected as being stored in the pre-created second storage space, the grid involved in the detection is a grid that has been repeatedly searched for.

This technical solution searches for a new known grid (a known grid that was not repeatedly searched for) in eight neighborhoods centered on the current search location of the robot, and updates the new known grid as the currently searched position of the robot. The currently searched position of the robot is updated by repeating the step S1 and step S2, to search for passable areas formed by known grids connectivity with the shortest path features, and expand the passable distance information of the robot one by one. All the known grids in the farthest area passable to the robot centered on the current position of the robot are obtained until the first area passage conditions are met, to quickly identify the connection relationship between the current position of the robot and the preset known grid area in the close range area.

Further, the step 1 also includes: the step 11 and the step 12 are repeatedly performed, until the pre-created first storage space is empty and the latest searched known grid does not meet the first area passage condition, it is determined to complete the search of all known grids within the longest distance passable by the robot; the longest distance passable by the robot is the maximum of the search radius obtained during the step 12 is performed; after step 2 is performed, and before step 3 is performed, the pre-created first storage space and the pre-created second storage space are empted. In this technical solution, in the process of repeating steps 11 and 12, a condition for finish searching all known grids in the reachable farthest area of the robot is established.

Further, after step 2 is completed and before step 3 is started, the first pre-created storage space and the second pre-created storage space are empted. Since the robot is required to execute step 3 to further search all mark type grids in a neighborhood and guide determination of whether the preset known grid area is searched on this basis, grid information stored by searching only the known grids in the previous step is cleared, and an influence on a search range due to a repeated search is avoided.

Further, meeting the second area passage condition means that the search radius of the robot is greater than the diameter of the body of the robot, so that the length of the line segment between the current position of the robot and the latest known grid searched in step 3 is greater than the machine body diameter of the robot. The traffic conditions for the second area are met only when the body diameter is smaller than the body diameter. The map area used to represent the current location of the robot is not connected to the preset known grid area, and the two areas are relatively separated.

Further, at step 3 the method of searching for a connected domain by searching the closest grid within a neighborhood includes: step 31, in a pre-created first storage space, a grid closest to the currently searched position of the robot is screened out of a neighborhood grid of the currently searched position of the robot, then step 32 is performed; step 32, the grid information of the currently searched position of the robot is storied into a pre-created second storage space to store as a searched target grid, and grid information of a neighborhood grid of the grid screened in the step 31 is stored into the pre-created first storage space to store the target grid to be searched, so that the first storage space stores grids marking passable information, unknown grids and / or grids marked obstacle information in the neighborhood of the current position of the robot; when the grid screened in the step 31 is a known grid, the grid screened in the step 31 is updated as the latest searched known grid determined in the step 3 or step 4;the neighborhood grid of the currently searched position of the robot includes 8 adjacent grids on the grid map constructed by the robot, these 8 adjacent grids are centered on the currently searched position of the robot, known grids in these 8 adjacent grids constitute the connected domain with the currently searched position of the robot; the grids screened in the step 31 are not repeatedly screened grids.

With respect to steps 11 and 12 in the foregoing technical solution, after this technical solution determine that the connected domain search by searching for new known grids in eight neighborhoods centered on the currently searched position of the robot is unable to obtain a preset known grid area connected to the current position of the robot, it is adjusted to search for the grid with the shortest path characteristic in the eight neighborhood centered on the currently searched position of the robot as the target grid to be searched, and expand the passable distance information of the robot, so as to quickly search for disconnected preset known grid areas in all directions and search for connected preset known grid areas in a small area; the execution of steps S31 to step S32 is not constrained by the known grid and unknown grid constraints, which facilitates a larger range of grids search, that is, not limited to a mark attribute of the grid.

Further, after the pre-created first storage space and the pre-created second storage space are emptied, before the step 31 is performed, the method further includes: the grid information of the current position of the robot is stored into the pre-created first storage space, and the current position of the robot is configured as the currently searched position of the robot; then a grid closest to the currently searched position of the robot is screened from the pre-created first storage space, so that the current position of the robot is the screened grid closest to the currently searched position of the robot; then the grid information of the current position of the robot is stored into the pre-created second storage space, and the grid information of the neighborhood grid of the current position of the robot is stored into the pre-created first storage space. In this technical solution, the current position of the robot preferentially serves as a search starting point of a neighborhood grid, and effectiveness and orderliness of searching neighborhood grids in a plurality of directions with the current position of the robot as a center are improved.

Further, the step 3 includes: the step 31 and the step 32 are repeatedly performed, until the line segment length between the current position of the robot and the latest searched known grid determined in the step 11 is greater than the body diameter of the robot; wherein, before the step 31 is performed repeatedly, a grid screened in the last step 31 is updated as the currently searched position of the robot; wherein, when the grid information of the grid screened in the step 31 is detected as not being stored in the pre-created second storage space, the grid involved in the detection is a grid that has not been searched repeatedly for; when the grid information of the grid screened in the step 31 is detected as being stored in the pre-created second storage space, the grid involved in the detection is a grid that has been repeatedly searched for.

In this technical solution, a new grid (grid not repeatedly searched) is searched in eight neighborhoods with the current search position of the robot as the center and the current search position of the robot is updated, a searchable area composed of grids having shortest path characteristics is searched by repeating steps 31 and 32, and moreover the reachable distance information of the robot is expanded to serve as a determination condition for stopping searching an unknown area until a known grid in an unreachable preset known grid area of the robot is obtained, such that a connection relation between the current position of the robot and the preset known grid area can be rapidly identified within a wider range area.

Further, the step 3 also includes: the step 31 and the step 32 are repeatedly performed, until the pre-created first storage space is empty and the latest searched known grid does not meet the first area passage condition, it is determined to complete the search of all the grids within the longest distance searchable; the longest distance searchable is determined by the size of the area in which the robot is allowed to move, or by the detectable distance of sensors of the robot. In this technical solution, in the process of repeating steps 31 and 32, a condition for finishing searching all grids in the searchable farthest area of the robot is established.

Further, in the process of repeating steps 31 and 32, the known grid that is screened out in step 31 and nearest to the current search position of the robot and the current search position of the robot are in the same connected domain, and the unknown grid that is screened out in step 31 and nearest to the current search position of the robot and the current search position of the robot are not in the same connected domain. In a case that the known grid newly searched out satisfies the second area passing condition, the connected domain searched out is not connected to the preset known grid area, such that the current position of the robot is located in an island area relative to the preset known grid area. Therefore, discrete map area information is collected for the robot.

A chip, the chip is configured to perform a program code corresponding to the navigation method.

A robot, the robot is provided with the chip, the robot is equipped with visual sensors that detect unknown environmental areas to construct a map and to mark known grids on maps constructed in real time.

Further, the robot is equipped with a visual sensor, which is configured to detect an unknown environmental area, such that a map is constructed, and a known grid is marked on the map constructed in real time. Therefore, error accumulation of the robot relocalization is reduced.

### Brief Description of the Drawings

Fig. 1 is a flowchart of a first area judgment method according to an embodiment of the disclosure.
Fig. 2 is a flowchart of a navigation method of a robot according to another embodiment of the disclosure.

### Detailed Description of the Embodiments

The specific embodiment of the invention is further explained in combination with the drawings. It should be noted that the following details are exemplary and are intended to provide a further description of this disclosure. Unless otherwise specified, all technical and scientific terms used herein have the same meaning as normally understood by ordinary technicians in the technical field to which the disclosure belongs.

It should be noted that the term used herein is only intended to describe the specific embodiment, and is not intended to limit the exemplary embodiment according to the present disclosure. The singular, as used here, is also intended to include the plural, unless the context specifies otherwise, and it should be also understood that when the terms "including" and / or "including" are used in this description, they indicate the existence of characteristics, steps, operations, devices, components and / or combinations thereof.

In this embodiment, after the robot is started, or after being triggered for relocalization , or after successful relocalization, or during real-time navigation and position the robot marks grid without obstacle information or grid marking the obstacle information near the start position to construct a local map, specifically, the grids in the circular region with the current position of the robot as the center and the preset detection length as the radius are marked as known grids, wherein the preset probe length is less than or equal to the body diameter of the robot. The known grids include grid without obstacle information and grid marking the obstacle information. Those skilled in the art can understand: the environmental information around the current position of the robot marked in the local map, environmental information includes grids within the map areas constructed by the robot, these grids are allowed to be marked as three states: free, occupied, and unknown; The grid in the free state is the grid not occupied by the obstacle, which is the grid position point that the robot can reach, and is the grid without obstacle information, which can form the unoccupied area; The grid of the occupied state refers to the grid occupied by an obstacle, which is the grid marking the obstacle information and can form the occupied area; An unknown grid refers to the grid area with unclear specific situation in the map construction process of the robot, which is the position point is often blocked by obstacles and can form the unknown area.

It should be noted that, taking the cleaning robot as an example, local probabilistic grid map can be constructed based on single-line lidar, or local grid map can be constructed based on the visual sensor. And global map is: the cleaning robot used for the first time, using its own assembly of various sensors (e. g., acceleration sensor, gyroscope, ultrasonic rangefinder, camera, single-line laser radar, etc.) for each room movement area search, sensing each room position, shape and size, as well as the position, shape and size of the obstacles encountered, and accordingly draw a environmental boundary map, through the way of walking in the indoor map. The map includes occupied area, unoccupied area, and unknown area, among, both the occupied area and unoccupied area can be attributed to the swept area.

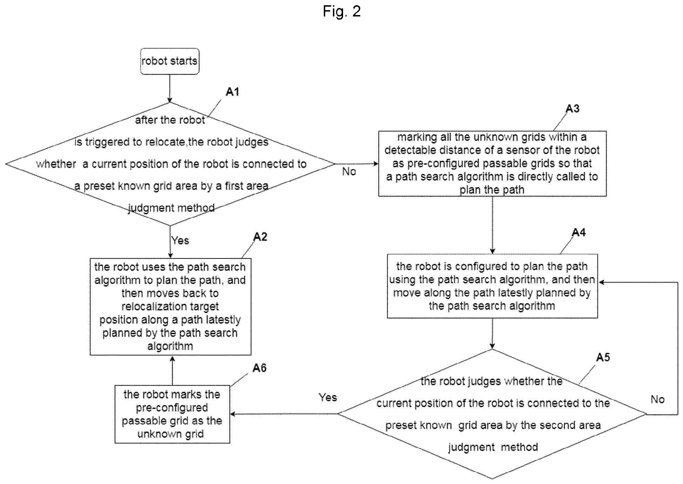

An embodiment of the disclosure discloses a navigation method of a robot, as shown in Fig. 2, the method specifically includes the following steps:
At step A1, after the robot is triggered to relocate, the robot judges whether a current position of the robot is connected to a preset known grid area by a first area judgment method, and judges determine whether the robot is located in the constructed map area, if so, step A2 is performed otherwise step A3 is performed. It should be noted that the robot performs the first area judgment method in a stationary state before the navigation movement, or after the foregoing local map is constructed, it stands still to perform the first area judgment method.

This embodiment may need to return across the unknown region to the preset known grid area after starting relocalization, without judging whether the current position of the robot is connected to the preset known grid area, in a case where the current position of the robot is not connected to the preset known grid area, i. e., the local map constructed around the current position of the robot is not connected to the preset known grid area, the preset known grid area separated from the current position area of the robot, or the preset known grid area separated from the local map constructed around the current position of the robot will only retain the preset time, resulting in the robot losing the preestablished preset known grid area. If the robot does not determine the connectivity of the current position of the robot and the preset known grid area and mark it, then the robot loses the relocalization target position within the preset known grid area, and fails to plan a passable path to navigate back to the relocalization target position.

At step A2, the robot is controlled to use the path search algorithm to plan the path, and then moves back to relocalization target position along a path latestly planned by the path search algorithm, wherein, a path latestly planned by the path search algorithm is the latest planning path. Preferably, the path search algorithm used in this embodiment includes, but is not limited to, the D* algorithm, focussed D algorithm, D* Lite algorithms, in which these incremental heuristic search algorithms do not have the sense of direction possessed by the A-star algorithm, but on the relocalization target position the path node represented by the known grid is kept searching for. Compared to A-star algorithm, the main feature of incremental heuristic search algorithm is that the path search from the relocalization target position to the current position of the robot, this path search is more of a divergent search from the relocalization target position until the current position of the robot is included in the search range, which is more effective than repeated A * search(performed repeatedly by the A-star algorithm) when facing new obstacles.

At step A3, all the unknown grids within a detectable distance of a sensor of the robot are marked as pre-configured passable grids so that a path search algorithm is directly called to plan the path, and then step A4 is performed. Wherein the pre-configured passable grid is allowed to be connected to the path planned by the path search algorithm constructed by the robot and the preset known grid area; wherein the path planned by the path search algorithm supports the bypass of the detected grids marking the obstacle information, a grid marking the obstacle information is an obstacle grid, i. e. the obstacle grid included in the known grid.

At step A4, combined with the pre-configured passable grid, the robot is configured to plan the path using the path search algorithm, and then move along the path including the unknown grid latestly planned by the path search algorithm, and then step A5 is performed. It should be noted that when the robot avoids the obstacle grid using the path planned by the path search algorithm, the current movement direction of the robot includes the direction of walking around the obstacle clockwise along the left edge of the obstacle, or counterclockwise along the right edge of the obstacle. Preferably, compared with the A-star algorithm, when the robot finds new obstacles in the path planned by the D * algorithm to the target position, the new obstacles will not affect the path node between the new obstacle and the new obstacle will not affect its path to the target position. The new obstacle will only affect the path of the nodes from the position of the object to the range between the obstacle. At this time, the nodes around the new obstacle are added by the D * algorithm to the priority queue created based on the D * algorithm for processing, and then propagate to the position of the object, which can minimize the computational overhead.

At step A5, in the process of moving the robot along a path latestly planned by the path search algorithm(a latest planning path), whether the current position of the robot is connected to the preset known grid area is judged by the second area judgment method, if so, step A6 is performed, otherwise return to perform step A4.

At step A5, the second area judgment method specifically includes:
At step A51, the current position of the robot is updated as a currently searched position of the robot, and then step A52 is performed. Specifically, the current position of the robot is not necessarily the position where the robot is triggered to relocate, and the robot may trigger to perform step A5 from the position triggered to relocate to a new path node planned by the path search algorithm.
At step A52, with the currently searched position of the robot as a starting point, along a current movement direction of the robot, whether the neighborhood grid of the currently searched position of the robot is a known grid is judged, if so, the line segment length between the neighborhood grid of the currently searched position of the robot and the current position of the robot is obtained, and then step A53 is performed, otherwise the search is stopped and the robot is controlled to move along the latest planning path which is the path latestly planned by the path search algorithm (one or more of the newly planned path nodes); and then step A53 is performed.
At step A53,the robot judges whether the line segment length between a neighborhood grid of the currently searched position of the robot and the current position of the robot is greater than a preset passable distance, if so, it is determined that the current position of the robot is connected to the preset known grid area, otherwise a neighborhood grid of the currently searched position of the robot is updated as the currently searched position of the robot, and then step A52 is returned to continue to judge whether the neighborhood grid is a known grid along the current movement direction of the robot; among, the preset passable distance is greater than the diameter of the body of the robot and less than or equal to twice the diameter of the body of the robot, so as to protect the safety of the robot in the process of searching. Because when the robot is searched on the neighborhood grid of the robot's currently searched position or the robot's current movement direction, it is difficult for robot to avoid obstacles and easy for robot to be damaged. So the maximum segment length between the neighborhood grid of the currently searched position of the robot and the current position of the robot is more than twice the diameter of the body of the robot, the smallest obstacle avoidance channel is left for the robot, at the same time, it can prevent the misjudgment of regional connectivity caused by the increase of local map combination constructed by the robot.

At step A6, the robot marks the pre-configured passable grid in step A3 as the unknown grid described in step A3, and then step A2 is performed to return to the relocalization target position along the latest planning passable path.

Compared with the prior art, in the foregoing step A1 to step A6, when the position of the robot is disconnected from the preset known grid area constructed before relocalization, the grid allowing the passage of the robot is marked within the detectable distance of the sensor of the robot in order to plan the navigation path for the robot to actually walk into the preset known grid area, thus, the robot uses the path search algorithm to plan the navigation path in the allowable map area, so as to back to the relocalization target position.

In the foregoing embodiment, after the robot is triggered to relocate, the current position of the robot is marked (mapped as) as a known grid in the real-time constructed map and is a new position relative to the relocalization target position. Thus, the connectivity between the known grid and the current position of the robot is used to search out the known grid area that allows the robot to reach in the local area.

Another embodiment of the present invention discloses the first area judgment method, specifically includes:
At step 1 (corresponding to step 11), a connected domain is searched for by searching the closest known grid within a neighborhood, until it is determined that a latest searched known grid meets a first area passage condition, the current position of the robot is connected to the preset known grid area, wherein a local map constructed by the robot at its current position does not overlap with the preset known grid area. Searching for a connected domain is considered as a connected domain search in this disclosure. At step 1, the robot moves within the motion area and traverses the generated local map, the local map includes the current position of the robot. The method of searching for a connected domain with the current position of the robot as the search center is Performed, when the search center is updated by the search position, the neighborhood search with the new search center is continued, the search of all known grids and their neighborhoods in the 360-degree direction are realized, until the latest searched known grid meets the first area passage condition, searching the connected domain is stopped, and it is confirmed that the current position of the robot is connected to the preset known grid area, that is, the local map constructed at the current position of the robot is adjactedly connected with the preset known grid area, or the local map constructed at the current position of the robot is within the coverage of the preset known grid area and the local map constructed by the robot at its current position overlaps with the preset known grid area.
At step 2 (corresponding to step 12), after a search of all known grids within the longest distance passable is completed by the method of searching for a connected domain described in the step 1, if it is determined that the latest searched known grid does not meet the first area passage condition, and then step 3 is performed. The step 2 finish searching all the known grids within the local map constructed by the robot at the current position, but it is not enough to confirm that no known grid exists outside of this local map, because step 1 does not perform the method of searching for a connected domain for the unknown grid and its corresponding neighbors within this local map, so that the search determination operation of steps 1 to step 2 is not comprehensive enough, so it is necessary to perform step 3 to continue to search for the new connected domain.
At step 3, a connected domain is searched for by searching the closest grid within a neighborhood, until it is determined that a latest searched known grid meets a second area passage condition, and it is determined that the current position of the robot is not connected with the preset known grid area. Searching for a connected domain is considered as a connected domain search in this disclosure. At step 3, the connected domain search was performed in the eight neighborhoods with the current position of the robot as the search center. When the search center is replaced by the search position, the neighborhood search with the new search center is continued, the search of all the grids and their neighborhoods within 360 degrees is realized, until the latest searched known grid meets the second area passage condition, searching is stopped, that is, performing the method of searching for a connected domain is stopped, and it is confirmed that the current position of the robot is not connected to the preset known grid area, that is, the local map constructed at the current position of the robot is located outside the area of the preset known grid and has no neighbors.
At step 4, after a search of all the grids within the longest distance searchable is completed by the connected domain search described in the step 3, if it is determined that a latest searched known grid does not meet the second area passage condition, it is determined that the current position of the robot is connected to the preset known grid area, and a local map constructed by the robot at its current position overlaps with the preset known grid area. At step 4, when searching all the grids within the local map constructed by the robot at the current position are finished, it is confirmed that no known grids exist on the outside of this constructed local map, or consider this constructed local map to overlap with the preset known grid area, so as to make the search range from step 3 to step 4 more comprehensive.

Wherein the preset known grid area is a map area constructed and stored in the same motion area before performing the first area judgment method, the same motion area includes a known map area prereached by the robot. The preset known grid area includes a known map area prereached by the robot, and a traversed area, but the robot is forced to move out of the preset known grid area to the current position of the robot to trigger the relocalization, so that the grid information of the current position of the robot is determined and the circular area constructed by the robot at the current position with the preset detection length is determined, which covers the known grid area between the circumference, within the circumference, to the current position of the robot.

Compared to the prior art, the foregoing step 1 to step 4 control the robot to search the known grid of the neighborhood from the perspective of reachability of the robot, by means of searching a connected domain, identifying connectivity from the near to the distant within the known grid area, then connectivity from the near to the distant in all types of grid areas are identified, including the local map constructed at the current position of the robot is adjacent to the known map area, the local map constructed at the current position of the robot overlaps with the known map area, the local map constructed at the current position of the robot is not connected with the known map area, whether the current position of the robot is connected to the known map area at the corresponding distance is in as to comprehensively judged, then whether the current position of the robot is in the known map area is judged.

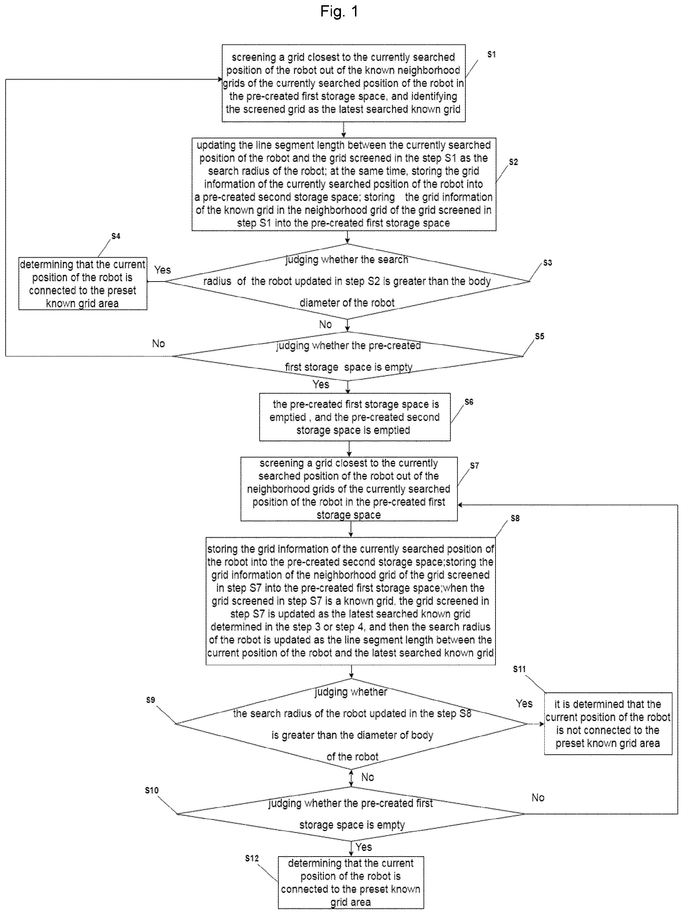

As an embodiment, as shown in Fig. 1, the first area judgment method specifically includes:
At step S1, a grid closest to the currently searched position of the robot is screened out of the known neighborhood grids of the currently searched position of the robot in the pre-created first storage space, and the screened grid is identified as the latest searched known grid identified in the step 1 through the method of searching for a connected domain by searching the closest known grid. Then step S2 is performed. It should be noted that the pre-created first storage space stores the known neighborhood grid of the currently searched position of the robot. The known neighborhood grid of the currently searched position of the robot is a known grid in the neighborhood of the currently searched position of the robot. At step S1, the grid closest to the currently searched position of the robot indicates that this grid has the minimum linear distance from the currently searched position of the robot, at least the minimum linear distance relative to the other neighborhood grid of the currently searched position of the robot.
   concretely, at step S1, the currently searched position of the robot is taken as the starting point of the search, the adjacent positions of the upper, left, upper left, lower, lower left, right, right, upper and lower right of the currently searched position of the robot belong to the same connected domain as the currently searched position of the robot, that is, eight neighborhood grids, then a known grid closest to the currently searched position of the robot is screened from the eight neighborhood grids, the one closest to the currently searched position of the robot is marked as a grid without obstacle information or a grid marking the obstacle information. If more than two known grids closest to the currently searched position of the robot are screened, one of them is randomly selected as the latest searched known grid, the remaining distance to the closest known grid is configured as untraversed, it is beneficial to search out all known grids connected to the current position of the robot. In general, the upper, lower, left, and right adjacent positions of the currently searched position are the closest relative to the currently searched position of the robot.
At step S2, the line segment length between the currently searched position of the robot and the grid screened in the step S1 is updated as the search radius of the robot, so as to describe the current distance the robot can reach (directly).At the same time, the grid information of the currently searched position of the robot is stored into a pre-created second storage space, so that the grid information of the currently searched position of the robot is stored as a searched target grid, that is, the grid information configured for the next search origin. Preferably, the pre-created second storage space storage also includes grids information of the currently searched position for distinguishing the searched grids on the map area; the grid information of the known grid is stored in the neighborhood grid of the grid screened in step S1 into the pre-created first storage space, storing as the target grids to be searched. Preferably, if more than two known grids closest to the currently searched position of the robot are screened, the pre-created first storage space is also used to store the known grid of the neighborhood grid closest to the currently searched position of the robot, in addition to the grid screened in step S1. So that the pre-created first storage space can only store the grid information corresponds to the grid without obstacle information and grid marking the obstacle information in the neighborhood of the currently searched position of the robot. Then step S3 is performed.

By performing the foregoing step S1 and step S2 to find the known grid in eight neighborhoods centered on the current search location of the robot, the known grid with the shortest path feature is found as the target grid to be searched and the passable distance information of the robot is expanded, while the searched known grid is preserved to distinguish the searched areas and unsearched areas of the robot, so that a rapid local area search for connected domains formed by known grids connectivity is realized, then judging whether the current position of the robot to reach the preset known grid area is speeded up.

At step S3, whether the search radius of the robot updated in step S2 is greater than the body diameter of the robot is judged, if so, step S4 is performed, otherwise step S5 is performed. That is to say, step S4 is performed when the latest searched known grid meets the first area passage condition, otherwise, after whether to finish searching all the known grids in the foregoing constructed local map area is judged, then choose to repeatedly performing the step S1 and the step S2. The implementation performs the method of searching for a connected domain by searching the closest known grid in the neighborhood.

At step S5, whether the pre-created first storage space is empty is judged, if so, performing the foregoing steps S1 to steps S5 is stopped, so as to stop searching only for known grids in a local map, then step S6 is performed; otherwise step S1 is performed to begin repeatedly performing the foregoing steps S1 and steps S2, that is, performing the foregoing connected domain search in the eight neighborhoods is continued to search for the next connected domain formed by the known grid neighbors. Specifically, before the step S1 is performed, the currently searched position of the robot is updated as the grid screened in the last step S1. The last step S1 is considered as the step S1 performed last time. When it is detected that the grid information of the grid screened in the step S1 is not stored in the pre-created second storage space, the grid involved in detection is a grid that closest to the robot's current search position and has not been searched repeatedly for. When it is detected that the grid information of the grid screened in the step S1 has already been stored in the pre-created second storage space, the grid involved in detection is a grid that has been searched repeatedly for.

At step S4, it is determined that the current position of the robot is connected to the preset known grid area, among, a local map constructed by the robot at its current position overlaps with the preset known grid area, that is, the local map area where the current position of the robot is located (configured to be composed of a known grid) is adjacent to the preset known grid area, or the local map area where the current position of the robot is located (a relatively small area configured to be composed of known grids) is within the coverage of the preset known grid area (relatively large area), thus, it is convenient for the robot to return to a target point (a relocalization target position)of the preset known grid area after relocalization, while performing the first area judgment method is ended. The present embodiment searches for a new known grid (a known grid that was not repeatedly searched for) in eight neighborhoods centered on the current search location of the robot, and updates the new known grid as the currently searched position of the robot. The currently searched position of the robot is updated by repeating the step S1 and step S2, to search for passable areas formed by known grids connectivity with the shortest path features, and expand the passable distance information of the robot one by one. All the known grids in the farthest area passable to the robot centered on the current position of the robot are got until the first area passage conditions are met, to quickly identify the connection relationship between the current position of the robot and the preset known grid area in the close range area. It should be noted that in the process of repeating the steps S1 and S2, the known grid screened in the step S1 belongs to the same connected domain as the currently searched position of the robot. When the latest searched known grid meets the first area passage condition, the current location of the robot is connected to the preset known grid area through the connected domain, so that the current position of the robot, the connected domain and the preset known grid area become the connected domain supporting the robot to plan a feasible path.

To be noted, it is judged that the pre-created first storage space is empty, that is, the grid information of the known grid stored inside the pre-created first storage space has all been read out to participate in the connected domain search, specifically, in the case that the latest searched known grid does not meet the first area passage condition, when the pre-created first storage space is empty, after the search of all known grids within the longest distance passable is completed by using the connected domain search described in step 1, it is determined that no known grid for storing as the target grid to be searched within the longest distance passable to deposit into the first storage space, and it is determined that all known grids from the pre-created first storage space are stored as searched target grids; among, the longest distance passable is updated as the maximum search radius obtained during the performation of step S1 to step S5. So in this embodiment, during the process of repeating the steps S1 and S2, it is determined that the conditions for the end of all known grid searches in the farthest region passable by the robot.

On the basis of the foregoing embodiment, before the step S1 is performed, the method further include: after the pre-created first storage space and the pre-created second storage space are created, the first storage space and the second storage space are initialized respectively; then, the grid information of the current position of the robot is stored in the pre-created first storage space, and the current position of the robot is updated as the currently searched position of the robot. Then the grid closest to the currently searched position of the robot is screened out of the pre-created first storage space, so as to make the current position of the robot the screened grid closest to the currently searched position of the robot, and the search radius of the robot is updated as 0; The grid information of the current position of the robot is then stored in the pre-created second storage space, and the grid information of the known grid in the neighborhood of the current position of the robot is stored in the pre-created first storage space, so that the pre-created first storage space stores only the detected grid without obstacle information and / or detected grid marking the obstacle information in the neighborhood of the current position of the robot; among, the pre-created first storage space is the memory space that supports caching grid information in first-in, first-out order. In case of the pre-created first storage space is set to the priority queue, when the first storage space is judged as empty in the step S5, perhaps the current position node of the robot exits from the priority queue. The present embodiment prefers the current position of the robot as the search starting point of the connected domain to improve the effectiveness and order of searching the adjacent connected domain. The pre-created second storage space is preferably set as a list structure.

It is worth noting that, if the pre-created first storage space is empty and the latest searched known grid does not meet the first area passage condition, step S6 is performed. At step S6, the pre-created first storage space is emptied to avoid the influence of the target grid to be searched stored in the foregoing embodiment, and the pre-created second storage space is emptied to avoid the influence of the searched target grid stored in the foregoing embodiment, so that the initialization of the pre-created first storage space and the pre-created second storage space is completed, and then step S7 is performed.

In this embodiment, if the line segment length between the current position of the robot and a latest searched known grid is less than or equal to the body diameter of the body of the robot, it indicates that no new known grid exists in the neighborhood of the latest searched known grid, and it indicates that the passable path can not be searched for in the neighborhood of the latest searched known grid. When the robot is mapping and positioned in a new position, if only unknown grids can be searched from the neighborhood of the currently searched position, the robot has searched all known grids in an area within a fuselage diameter from the current position of the robot, and the remaining are unknown grids outside the fuselage diameter from the current position of the robot, it is indicated that the robot has traversed the map area constructed by itself. Wherein a fuselage diameter is considered as a diameter of the body of the robot. Since the robot needs to perform step 3 to further search for all marker-type grids on the neighborhood and then guide to search to the preset known grid area, the grid information stored in the foregoing step is emptied to avoid affecting the search range due to repeated search.

At step S7, a grid closest to the currently searched position of the robot is screened out of the neighborhood grids of the currently searched position of the robot in the pre-created first storage space, and the screened grid is not necessarily identified as the latest searched known grid in the step 3 through the method of searching for a connected domain by searching the closest known grid. And then step S8 is performed. It should be noted that the pre-created first storage space stores the neighborhood grid of the currently searched position of the robot; the neighborhood grid of the currently searched position of the robot is a grid in the neighborhood of the currently searched position of the robot; and the neighborhood grid of the currently searched position of the robot includes known grids and unknown grids in the neighborhood of the currently searched position. Concretely, at step S7, the currently searched position of the robot is taken as the starting point of the search, the adjacent positions of the upper, left, upper left, lower, lower left, right, right, upper and lower right of the currently searched position of the robot belong to the same connected domain as the currently searched position of the robot, that is, eight neighborhood grids, then a grid closest to the currently searched position of the robot is screened from the eight neighborhood grids; if more than two grids closest to the currently searched position of the robot are screened, one of them is randomly selected as the latest searched grid, the remaining distance to the closest grid is configured as untraversed, as a candidate for target point to be searched, also leading to a new round of connected domain search with the latest searched grid as the starting point of the search. Relative to the foregoing step S1, it is beneficial to search out all the grids connected to the current position of the robot in a wider range, but not just searching for a discrete known grid.

At step S8, the grid information of the currently searched position of the robot is stored into the pre-created second storage space, so that the grid information of the currently searched position of the robot is stored as a searched target grid, the grid information of the currently searched position of the robot is also configured for the next search origin, so as to distinguish the searched grids on the map area; at the same time, the grid information of the neighborhood grid of the grid screened in step S7 is stored into the pre-created first storage space to store as the target grids to be searched, so that the pre-created first storage space stores the grid information corresponding to the grid without obstacle information, unknown grid and / or grid marking the obstacle information in the neighborhood of the currently searched position of the robot; preferably, if more than two grids closest to the currently searched position of the robot are screened, the pre-created first storage space is also used to store the neighborhood grid closest to the currently searched position of the robot, in addition to the grid screened in step S7. When the grid screened in step S7 is a known grid, the grid screened in step S7 is updated as the latest searched known grid determined in the step 3 or step 4, and then the search radius of the robot is updated as the line segment length between the current position of the robot and the latest searched known grid, so that the search radius is used as the exploration length to describe the current searchable distance of the robot, but not necessarily being the passable distance of the robot, as it may cover the unknown grid. Note that the grids screened in step S7 are not the grids that were repeatedly screened.

Relative to steps S1 to S2 in the foregoing embodiment, after steps S7 to S8 determine that the connected domain search by searching for new known grids in eight neighborhoods centered on the currently searched position of the robot is unable to obtain a preset known grid area connected to the current position of the robot, it is adjusted to search for the grid with the shortest path characteristic in the eight neighborhood centered on the currently searched position of the robot as the target grid to be searched, and expand the passable distance information of the robot, so as to quickly search for disconnected preset known grid areas in all directions and search for connected preset known grid areas in a small area; the execution of steps S7 to step S8 is not constrained by the known grid and unknown grid constraints, which facilitates a larger range of grids (not limited to the known grids of possible discrete distribution) search.

At step S9, whether the search radius of the robot updated in the step S8 is greater than the diameter of the body of the robot is judged, if so, step S11 is performed, otherwise step S10 is performed.

At step S10, whether the pre-created first storage space is empty is judged, if so, performing the foregoing steps S6 to S10 is stopped, and searching the grid in the local map is stopped, and then step S12 is performed, otherwise return to perform step S7 to repeat the foregoing steps S7 and S8, that is, searching for the next adjacent connected domain is continued by searching for the foregoing connected domain in the eight neighborhoods. Specifically, before the step S7 is performed, the currently searched position of the robot is updated as the grid screened in the last step S7. The last step S7 is considered as the step S7 performed last time. When it is detected that the grid information of the grid screened in the step S7 is not stored in the pre-created second storage space, the grid involved in detection is a grid that has not been searched repeatedly for. When it is detected that the grid information of the grid screened in the step S7 has already been stored in the pre-created second storage space, the grid involved in detection is a grid that has been searched repeatedly for.

At step S11, it is determined that the current position of the robot is not connected to the preset known grid area, that is, the local map area where the current position of the robot is located (configured to be composed of the known grid) is not connected to the preset known grid area. It should be noted that, a known grid screened in the step S7 belongs to the same connected domain as the currently searched position of the robot, an unknown grid screened in the step S7 doesn't belong to the same connected domain as the currently searched position of the robot. When the latest searched known grid meets the second area passage condition, the searched connected domain is not connected to the preset known grid area, and it is determined that the current position of the robot is in the isolated area relative to the preset known grid area, so as to collect discrete map area information for the robot, but increases the difficulty of the robot to navigate back to a target point of the preset known grid area after relocalization.

Preferably, two connected areas mean that all the points in these two areas can be connected to each other, and the outside of the two connected areas is the area of the obstacle or map boundary.

At step S12, it is determined that the current position of the robot is connected to the preset known grid area, wherein the local map constructed by the robot at the current position overlaps with the preset known grid area. Concretely, step S10 judges that the pre-created first storage space is empty, that is, the grid information of the grid (all types of grids) stored inside the pre-created first storage space has all been read out to participate in the connected domain search, specifically, in the case where the latest searched known grid does not meet the second area passage condition, if the pre-created first storage space is empty, after the search of all grids within the longest distance searchable is completed by the connected domain search described in the step 3, it is determined that the search radius of the robot updated in step S8 remains less than the diameter of the body of the robot, that is, the known grid within the longest distance searchable is within the coverage of the local map constructed by the robot at its current position, and the local map constructed by the robot at its current position overlaps with the preset known grid area. Among them, the longest distance searchable is determined by the size of the area in which the robot is allowed to move, or by the detectable distance of sensors of the robot. If the detectable distance of sensors is greater than the maximum length of the moving area, the longest distance searchable is equal to the maximum length of the moving area; If the detectable distance of sensors of the robot is less than or equal to the maximum length of the moving area, the longest distance searchable is equal to the detectable distance of sensors of the robot.

At step S10,when it is judged that the pre-created first storage space is empty, it is determined that there is no known grid for storing as the target grid to be searched, and it is also determines that all the grids screened out of the pre-created first storage space are stored as the searched target grid. In this embodiment, by repeatedly performing the step S7 and the step S8, the condition of all known grids search ending within the furthest area that the robot is searchable is established.

To summarize the above steps, in the embodiment of the present invention, the robot can search for new known grids (grid that is not searched repeatedly)in eight neighborhoods centered on the currently searched position of the robot and update the currently searched position of the robot, but it is limited to robot to perform before the navigation and positioning occurs.

By repeatedly performing the step S7 and the step S8, a more comprehensive search is made for a searchable area consisting of the shortest path characteristics, and the passable distance information of the robot is expanded as a judgment condition for stopping searching the unknown area until the known grid within the preset known grid area where the robot is inpassable is obtained, thus, the connection relationship between the current position of the robot and the preset known grid area can be quickly identified in a larger area.

On the basis of the foregoing steps S7 to steps S12, after the pre-created first storage space and the pre-created second storage space are empted, before the step S7 is performed, the method further include: the grid information of the current position of the robot is stored into the pre-created first storage space, and the current position of the robot is configured as the currently searched position of the robot; then a grid closest to the currently searched position of the robot is screened from the pre-created first storage space, so that the current position of the robot is the screened grid closest to the currently searched position of the robot; and then the search radius of the robot is updated as 0 when the known grid is screened from the pre-created first storage space; then the grid information of the current position of the robot is stored into the pre-created second storage space, and the grid information of the neighborhood grid of the current position of the robot is stored into the pre-created first storage space, so that the pre-created first storage space stores the detected grid without obstacle information unknown grids and / or detected grid marking the obstacle information in the neighborhood of the current position of the robot. This embodiment prioritizes the current position of the robot as the starting point of the search for the neighborhood grid, the effectiveness and order of searching for a plurality of directional neighborhood grids centered on the current position of the robot are improved.

The embodiments shown in Fig. 1 and Fig.2, it should be emphasized that, as the robot constructs larger maps during navigation, the robot judges whether the current position of the robot is connected to the preset known grid area by performing the first area judgment method, then will appear: in the current direction of movement of the robot, even if the latest searched known grid determined in the step 1 meets the first area passage condition disclosed in the foregoing embodiment, the current position of the robot is also not connected to the preset known grid area; the reason is that the known area of the grid constructed during navigation becomes larger, so as to make the maximum distance of the robot in the current direction of movement of the robot becomes larger, the misjudgment phenomenon is led; there will also be: in the current direction of the robot, even if the latest searched known grid determined in the step 3 meets the second area passage condition disclosed in the foregoing embodiment, the current position of the robot is connected with the preset known grid area, the reason is that the known grid area that the robot constructed during navigation becomes larger to connect to the originally distant preset known grid area, Thus there is a misjudgment phenomenon. Therefore, this example of the present embodiment uses the navigation method of a robot to judge whether the current position of the robot is connected to the preset known grid area, which can avoid the influence of the known grid constructed during the robot navigation on the judgment area connectivity and reduce miscalculation. Therefore the success rate of relocalization and navigation are improved.

A chip, the chip is configured to perform a program code corresponding to the navigation method of the foregoing embodiment of the present invention. A chip that stores the program code corresponding to the navigation method of the foregoing embodiment. Compared with the prior art, the embodiment is performed based on the robot which equipped with the chip, the robot uses the shortest path characteristic to efficiently determine the area connected to the current position of the robot, and the calculation load is saved.

A robot, the robot is provided with the chip according to the foregoing embodiment, to enhance the path planning capability of the robot in searching for unknown environments. Preferably, the robot is equipped with visual sensors that detect unknown environmental areas to construct a map and to mark known grids on maps constructed in real time, so as to reduce the error accumulation of robot relocalization.

To be clear, the robot for the cleaning robot, the cleaning robot rotates in a circle at its current position, so the longest distance that the camera can sense is the longest distance that the cleaning robot can reach, wherein
with the current position of the robot as the center of the circle, the circle area determined with the radius of the maximum passable distance and the field of view area within the circle are determined as the passable area of the cleaning robot, the passable area of the cleaning robot is used to update instantly constructed local map and update the searched area information, but does not necessarily represent the currently searchable area of the robot, the current searchable area of the robot is mainly used to assess whether there is a passable navigation point in all directions.

Those skilled in the art should understand that the embodiments of the present application may be provided as method, systems, or computer program products. Therefore, the present application may take the form of a full hardware embodiment, a full software embodiment, or an embodiment combining software and hardware aspects. Further, the present application may take the form of a computer program product implemented on one or more computer available storage media (including, but not limited to, disk memory, CD-ROM, optical memory, etc.).

The present application is described with reference to the methods, equipment (system), and flow charts and / or block drawings of computer program products according to the embodiment of the present application. Understand the combination of each flow and / or box in the flow chart and / or block diagram, and / or box diagram that can be implemented by computer program instructions. These computer program instructions may be provided to a general purpose computer, a dedicated computer, an embedded processor or other programmable data processing device to produce a machine for instructions executed by a processor of a computer or other programmable data processing device to produce a device for implementing functions specified in a flow chart and / or a block diagram or boxes.

These computer program instructions may also be stored in a computer readable memory that can direct a computer or other programmable data processing device to work in a specific manner such that instructions stored in the computer readable memory are specified in a flow chart and / or a block or box.

These computer program instructions may also be loaded onto a computer or other programmable data processing device such that a series of operational steps are performed on a computer or other programmable device to generate computer-implemented processing, instructions executed on a computer or other programmable device to provide steps for implementing functions specified in a flow chart process or multiple processes and / or block diagram boxes or boxes are allowed.

The above is only a preferred embodiment of the invention, and is not a limitation of the invention as an equivalent embodiment using the technical content disclosed above. However, any simple modification, equivalent change and modification made to the above embodiments according to the technical scheme of the invention in accordance with the technical essence of the invention still fall within the scope of protection of the technical scheme of the invention..

## Claims

1. A navigation method of a robot, the navigation method comprises:
step A1, after a robot is triggered to relocate, judging whether a current position of the robot is connected to a preset known grid area by a first area judgment method or not, when the neighborhood grid of the currently searched position of the robot is a known grid, step A2 is performed, otherwise step A3 is performed;
step A2, using a path search algorithm, and then moving back to a relocalization target position along the latest planning path;
step A3, marking all the unknown grids within a detectable distance of a sensor of the robot as pre-configured passable grids so that a path search algorithm is directly called to plan the path, and then using the path search algorithm, and then moving along the latest planning path until determining the current position of the robot is connected to the preset known grid area by a second area judgment method, and then marking the pre-configured passable grid as an unknown grid, and then step A2 is performed;
wherein, the relocalization target position is a working position recorded within the preset known grid area before the robot is triggered to relocate; the current position of the robot is determined after the robot is triggered to relocate.

2. The navigation method of a robot according to claim 1, wherein at step A3, the second area judgment method comprises:
step A31 ,updating the current position of the robot as a currently searched position of the robot, wherein, the current position of the robot comprises the position where the robot is triggered to relocate;
step A32, with the currently searched position of the robot as a starting point, along a current movement direction of the robot, judging whether the neighborhood grid of the currently searched position of the robot is a known grid ,if so, obtaining the line segment length between the neighborhood grid of the currently searched position of the robot and the current position of the robot, and then step A33 is performed, otherwise stopping searching for new neighborhood grids and controlling the robot to continue to move along the latest planning path;
step A33, judging whether the line segment length between a neighborhood grid of the currently searched position of the robot and the current position of the robot is greater than a preset passable distance, if so, determining that the current position of the robot is connected to the preset known grid area, otherwise updating a neighborhood grid of the currently searched position of the robot as the currently searched position of the robot; and then step A32 is performed;
wherein, the preset passable distance is greater than a diameter of a body of the robot, and the preset passable distance is less than or equal to twice the diameter of a body of the robot.

3. The navigation method of a robot according to claim 2, wherein, after the robot is triggered to relocate, the current position of the robot is marked as a known grid in the real-time constructed map, and the current position of the robot is a new relative to the relocalization target position.

4. The navigation method of a robot according to claim 3, wherein, the pre-configured passable grid is allowed to be connected to a path planned by the path search algorithm ,to connect a local map constructed by the robot at its current position with the preset known grid area.

5. The navigation method of a robot according to any one of claims 1 to 4, wherein, after the robot is triggered to relocate, the robot constructs a local map at its current position, this local map is specific to:
with the current position of the robot as the center of the circle, grids in the area of the radius with a preset detection length are marked as known grids;
the preset detection length is less than or equal to a diameter of a body of the robot;
the known grids comprise grid without obstacle information and grid marking the obstacle information.

6. The navigation method of a robot according to any one of claims 1 to 4, wherein the path search algorithm is incremental heuristic search algorithm.

7. The navigation method of a robot according to claim 6, wherein at step A1, the first area judgment method comprises:
step 1, searching for a connected domain by searching the closest known grid within a neighborhood, until it is determined that a latest searched known grid meets a first area passage condition, the current position of the robot is connected to the preset known grid area, wherein a local map constructed by the robot at its current position does not overlap with the preset known grid area;
step 2,after a search of all known grids within the longest distance passable is completed by the connected domain search described in the step 1,if it is determined that a latest searched known grid does not meet the first area passage condition, and then step 3 is performed;
step 3, searching for a connected domain by searching the closest grid within a neighborhood, until it is determined that a latest searched known grid meets a second area passage condition, the current position of the robot is not connected with the preset known grid area;
step 4, after a search of all the grids within the longest distance searchable is completed by the connected domain search described in the step 3, if it is determined that a latest searched known grid does not meet the second area passage condition, determining that the current position of the robot is connected to the preset known grid area, wherein a local map constructed by the robot at its current position overlaps with the preset known grid area;
the preset known grid area is a map area in which the robot constructed and stored in the same motion area before performing the first area judgment method.

8. The navigation method of a robot according to claim 7, wherein when line segment length between the current position of the robot and a latest searched known grid determined in the step 1 is greater than a diameter of a body of the robot, meeting the first area passage condition.

9. The navigation method of a robot according to claim 8, wherein at step 1, the method of searching for a connected domain by searching the closest known grid within a neighborhood comprises:
step 11, screening a grid closest to the currently searched position of the robot out of a pre-created first storage space, and then identifying this screened grid as the latest searched known grid determined in the step 1 or step 2, and then step 12 is performed; wherein the pre-created first storage space stores a known neighborhood grid of the currently searched position of the robot, and the known neighborhood grid of the currently searched position of the robot is a known grid in the neighborhood grid of the currently searched position of the robot;
step 12, storing the grid information of the currently searched position of the robot into a pre-created second storage space to store as a searched target grid; and in the neighborhood of the grid screened in the step 11, storing the grid information of the known grid into the pre-created first storage space to store the target grid to be searched; updating the search radius of the robot as the line segment length between the current position of the robot and the latest screened grid determined in the step 11;
wherein, the neighborhood grid of the currently searched position of the robot comprises 8 adjacent grids on the grid map constructed by the robot, these 8 adjacent grids are centered on the currently searched position of the robot; the known grids in these 8 grids are the known neighborhood grids; the grid screened by step 11 does not belong to the repeatedly screened grid.

10. The navigation method of a robot according to claim 9, wherein, before the step 11 is performed, comprises:
after creating the pre-created first storage space for storage, storing the grid information of the current position of the robot into the pre-created first storage space, and configuring the current position of the robot as the currently searched position of the robot; then screening a grid closest to the currently searched position of the robot from the pre-created first storage space, so that the current position of the robot is screened out of the pre-created first storage space and being the closest to the currently searched position of the robot;
storing the grid information of the current position of the robot into the pre-created second storage space, and storing the grid information of the known grid in the neighborhood grid of the current position of the robot into the pre-created first storage space;
the pre-created first storage space is a memory space that supports caching grid information in first-in, first-out order.

11. The navigation method of a robot according to claim 10, wherein the step 1 comprises:
repeatedly performing the step 11 and the step 12 until the line segment length between the current position of the robot and a latest searched known grid determined in the step 11 is greater than the body diameter of the robot;
wherein, before the step 11 is performed repeatedly, updating a grid screened in the last step 11 as the currently searched position of the robot;
wherein, when the grid information of the grid screened in the step 11 is detected as not being stored in the pre-created second storage space, the grid involved in the detection is a grid that is not being repeatedly searched; when the grid information of the grid screened in the step 11 is detected as being stored in the pre-created second storage space, the grid involved in the detection is a grid that has been repeatedly searched for.

12. The navigation method of a robot according to claim 11, wherein the step 1 also comprises:
repeatedly performing the step 11 and the step 12 until the pre-created first storage space is empty and the latest searched known grid does not meet the first area passage condition, it is determined to complete the search of all known grids within the longest distance passable by the robot;
wherein, the longest distance passable by the robot is the maximum of the search radius obtained during the step 12 is performed;
after step 2 is performed, and before step 3 is performed, the method further comprises: emptying the pre-created first storage space and the pre-created second storage space.

13. The navigation method of a robot according to claim 9, wherein after step 2 is performed, and before step 3 is performed, the method further comprises: emptying the pre-created first storage space and the pre-created second storage space.

14. The navigation method of a robot according to claim 13, wherein when line segment length between the current position of the robot and a latest searched known grid determined in the step 3 is greater than a diameter of a body of the robot, meeting the second area passage condition.

15. The navigation method of a robot according to claim 14, wherein, at step 3, the method of searching for a connected domain by searching the closest grid within a neighborhood comprises:
step 31, in a pre-created first storage space, screening a grid closest to the currently searched position of the robot out of a neighborhood grid of the currently searched position of the robot, then step 32 is performed;
step 32, storing the grid information of the currently searched position of the robot into a pre-created second storage space to store as a searched target grid, and storing grid information of a neighborhood grid of the grid screened in the step 31 into the pre-created first storage space to store the target grid to be searched, so that the first storage space stores grids marking passable information, unknown grids and / or grids marked obstacle information in the neighborhood of the current position of the robot; when the grid screened in the step 31 is a known grid, updating the grid screened in the step 31 as the latest searched known grid determined in the step 3 or step 4;
the neighborhood grid of the currently searched position of the robot comprises 8 adjacent grids on the grid map constructed by the robot, these 8 adjacent grids are centered on the currently searched position of the robot, known grids in these 8 adjacent grids constitute the connected domain with the currently searched position of the robot;
the grids screened in the step 31 are not repeatedly screened grids.

16. The navigation method of a robot according to claim 15, wherein, after emptying the pre-created first storage space and the pre-created second storage space, before the step 31 is performed, comprising:
storing the grid information of the current position of the robot into the pre-created first storage space, and configuring the current position of the robot as the currently searched position of the robot; then screening a grid closest to the currently searched position of the robot from the pre-created first storage space, so that the current position of the robot is the screened grid closest to the currently searched position of the robot; then storing the grid information of the current position of the robot into the pre-created second storage space, and storing the grid information of the neighborhood grid of the current position of the robot into the pre-created first storage space.

17. The navigation method of a robot according to claim 16, wherein, the step 3 comprises:
repeatedly performing the step 31 and the step 32 until the line segment length between the current position of the robot and the latest searched known grid determined in the step 11 is greater than the body diameter of the robot;
wherein, before the step 31 is performed repeatedly, updating a grid screened in the last step 31 as the currently searched position of the robot;
wherein, when the grid information of the grid screened in the step 31 is detected as not being stored in the pre-created second storage space, the grid involved in the detection is a grid that has not been searched repeatedly for; when the grid information of the grid screened in the step 31 is detected as being stored in the pre-created second storage space, the grid involved in the detection is a grid that has been repeatedly searched for.

18. The navigation method of a robot according to claim 17, wherein, the step 3 also comprises:
repeatedly performing the step 31 and the step 32 until the pre-created first storage space is empty and the latest searched known grid does not meet the first area passage condition, it is determined to complete the search of all the grids within the longest distance searchable;
the longest distance searchable is determined by the size of the area in which the robot is allowed to move, or by the detectable distance of sensors of the robot.

19. A chip, wherein, the chip is configured to perform a program code corresponding to the navigation method of any one of claims 1 to 18.

20. A robot, wherein, the robot is provided with the chip according to claim 19.

21. The robot according to claim 20, wherein the robot is equipped with visual sensors that detect unknown environmental areas to construct a map and to mark known grids on maps constructed in real time.
